# EUROPEAN PATENT APPLICATION

(11) **EP 4 563 537 A1**
(43) Date of publication of application: **04.06.2025**
(21) Application number: 24215431.8
(22) Date of filing: 26.11.2024
(51) Int. Cl.: C02F 1/02, B01D 53/62, B01J 20/04, C01B 7/03, C01F 5/06, C01F 5/30, C01F 11/02, C01F 11/18, C01F 11/24, C22B 26/12

(54) **TREATMENT OF BRINE**

(30) Priority: 29.11.2023 US 202318522842
(71) Applicant: Energy and Environmental Research Center Foundation, Grand Forks, ND 58202-9017 (US)
(72) Inventor: MARTIN, Christopher Lee, 58201 Grand Forks (US)
(74) Representative: Forresters IP LLP

(57) **Abstract**

A method of treating a brine composition includes hydrolyzing a metal halide salt in the brine composition to form a hydrolysis product including a hydrohalic acid. The metal includes an alkaline earth metal or an alkali metal.

## Description

### CROSS-REFERENCE TO RELATED APPLICATIONS

This application is a continuation-in-part of and claims the benefit of priority under 35 U.S.C. § 120 to U.S. Utility Application 18/515,726 filed November 21, 2023, which is a continuation of and claims the benefit of priority under 35 U.S.C. § 120 to U.S. Utility Application 18/170,392 filed February 16, 2023, which is a continuation-in-part of and claims the benefit of priority under 35 U.S.C. § 120 to U.S. Utility Application 17/651,520 filed February 17, 2022, which claims the benefit under 35 U.S.C. § 119(e) to U.S. Provisional Patent Application Serial No. 63/200,390 filed March 4, 2021, the disclosures of which are incorporated herein in their entirety by reference.

### BACKGROUND

In the oil and gas industry, "produced water" is a term used to describe water that is produced as a byproduct during the extraction of oil or natural gas. Most produced water is brine, and most petroleum formations result in produced water having a total dissolved solids level that is too high for beneficial reuse. Other industrial processes also generate brine as a byproduct (e.g., "brine waste"), with examples including cooling tower and boiler effluent, reverse osmosis and ion exchange waste/reject streams, chlor-alkali and chemical plant waste, acid rock and mine drainage, food preservation and manufacturing waste streams, desalination waste from potable water creation, produced water from CO₂ sequestration, and irrigation runoff. Brine produced from petroleum extraction and other industrial processes can frequently have salinity that exceeds that of seawater, and can also contain contaminants such as silica, heavy metals, organic compounds, sulfates, nitrates, phosphates, and suspended solids. If untreated, release of such brines to the environment can cause an assortment of problems such as harm to animal or aquatic life, contamination of ground water, and contamination of soil.

The annual quantity of produced water from petroleum extraction in North Dakota is large. North Dakota's produced water reached a peak in 2019 at 742 MMbbl/yr and has leveled at 643 and 645 MMbbl/yr in 2020 and 2021, respectively. In 2021, the statewide average water-to-oil ratio was nearly 1.6:1, meaning that for every barrel of oil produced in North Dakota, approximately 1.6 barrels of produced water were generated, with the vast majority of that water (approximately 90%) being disposed of using deep well injection. Concentrated disposal of produced water in certain areas of the Bakken has led to localized over-pressurization of the receiving formation to the point of impacting drilling through the formation to access the deeper oil and gas formations. Countering pressurization from produced water disposal has increased oil production costs by requiring the addition of an extra well casing layer, known in the industry as a Dakota string, to keep pressurized water from interfering with the oil well. Combined, NaCl and CaCl₂ typically make up more than 95% of the mass of the dissolved solids in produced water from the Bakken.

Conventional treatment of brines for discharge to the environment is expensive and time consuming, and can include treatment with coagulants, polymers, additives, pH adjusters, membranes, electrochemical cells, filtration units, and ion exchange resins. Brines can cause corrosion of metal components and fouling of membranes. Conventional treatments for brine fail to extract significant value from the brine, and the treatment costs are substantially unrecoverable.

### SUMMARY OF THE INVENTION

Various aspects of the present invention provide a method of treating a brine composition. The method includes hydrolyzing a metal halide salt in the brine composition to form a hydrolysis product including a hydrohalic acid. The metal includes an alkaline earth metal or an alkali metal.

Various aspects of the present invention provide a method of treating a brine composition. The method includes hydrolyzing a metal halide salt in the brine composition to form a hydrolysis product including a hydrohalic acid and a hydroxide salt of the metal in the metal halide salt. The metal includes an alkaline earth metal or an alkali metal.

Various aspects of the present invention provide a method of treating a brine composition, the method including hydrolyzing a metal halide salt in the brine composition, the hydrolyzing including adding CO₂ gas to the brine composition, to form a hydrolysis product including a hydrohalic acid and a carbonate salt of the metal in the metal halide salt, a bicarbonate salt of the metal in the metal halide salt, or a combination thereof. The metal includes an alkaline earth metal or an alkali metal.

Various aspects of the present invention provide a method of recovering lithium from a brine composition. The method includes hydrolyzing a lithium halide salt and another metal halide salt in the brine composition to form a hydrolysis product including a hydrohalic acid and a salt of the lithium in the lithium halide salt. The metal includes an alkaline earth metal or an alkali metal.

Various aspects of the present invention have advantages over other methods of treating brine. For example, in various aspects of the present method, the hydrohalic acid produced by the hydrolysis, or other materials produced by the hydrolysis (e.g., metal hydroxide, metal carbonate, or metal bicarbonate), are valuable products that can be used or sold to offset or recover the costs and time expense of performing the method and/or of performing other treatments to the brine. In various aspects of the present method, the method can reduce the volume of brine that ultimately requires disposal. As compared to electrochemical brine splitting which has a primary energy input of electricity, various aspects of the present method have a primary energy input of heat which can be generated at lower cost than electricity using natural gas produced on-site or in a nearby area; as such, various aspects of the present method can be performed with lower cost and greater efficiency than electrochemical brine splitting. Various aspects of the present method can be tolerant of a wide variety of impurities found in brines that could otherwise foul or inactivate membranes or electrocatalysts used in conventional methods of brine treatment. In various aspects of the present method, the thermochemical nature of the method can leverage chemical processing economies of scale to result in a lower cost per unit volume of brine treatment as processing throughput is increased, unlike electrochemical processes which scale linearly by increasing the two-dimensional surface area for selective membranes and electrodes rather than leveraging the exponential economies of scale possible with a reactor with higher volumetric flow capacity.

In various aspects of the present method, the method can convert chloride-dominant salts found in various brines to carbonate form via the absorption of CO₂ gas. This feature can allow recovery of HCl in excess of the amount that could be obtained solely via generation from salts that undergo hydrolysis (e.g., CaCl₂ and/or MgCl₂), by extending chloride to be provided by salts not known to readily undergo hydrolysis (e.g., NaCl). In various aspects, the resulting metal carbonates can be more valuable and/or more easily stored for disposal as compared to the starting chloride form. In various aspects, the CO₂ gas used to create the metal carbonates can represent avoided or negative emissions of CO₂ to the atmosphere, thereby providing beneficial greenhouse gas reduction.

In various aspects of the present method, the method can remove one or more valuable metals from the brine, such as lithium (e.g., in the form of lithium hydroxide, lithium carbonate, or lithium bicarbonate), or rare-earth elements (REEs), in addition to forming the hydrohalic acid. By generating other valuable products such as hydrohalic acid during the removal of the one or more valuable metals, in various aspects of the present invention, the cost and labor of extracting the low-concentration but potentially high value or importance metals can be at least partially offset, providing a more efficient method of extracting the one or more valuable metals from the brine than other methods.

Bringing water to the surface that is displaced during CO₂ sequestration can provide CO₂ plume management, increased storage potential within the boundaries of a given storage facility, or a combination thereof. In various aspects, the method of the present invention can offer additional advantages of bringing the water to the surface by providing the hydrohalic acid produced by the hydrolysis, or other materials produced by the hydrolysis (e.g., metal hydroxide, metal carbonate, or metal bicarbonate).

### BRIEF DESCRIPTION OF THE FIGURES

The drawings illustrate generally, by way of example, but not by way of limitation, various embodiments of the present invention.
FIG. 1 shows a hydrolysis reactor and supporting process scheme, in accordance with various aspects.
FIG. 2 shows a scheme illustrating conversion of chloride-dominant salts to carbonate form with HCl formation, in accordance with various aspects.

### DETAILED DESCRIPTION OF THE INVENTION

Reference will now be made in detail to certain aspects of the disclosed subject matter. While the disclosed subject matter will be described in conjunction with the enumerated claims, it will be understood that the exemplified subject matter is not intended to limit the claims to the disclosed subject matter.

Throughout this document, values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "about 0.1% to about 5%" or "about 0.1% to 5%" should be interpreted to include not just about 0.1% to about 5%, but also the individual values (e.g., 1%, 2%, 3%, and 4%) and the sub-ranges (e.g., 0.1% to 0.5%, 1.1% to 2.2%, 3.3% to 4.4%) within the indicated range. The statement "about X to Y" has the same meaning as "about X to about Y," unless indicated otherwise. Likewise, the statement "about X, Y, or about Z" has the same meaning as "about X, about Y, or about Z," unless indicated otherwise.

In this document, the terms "a," "an," or "the" are used to include one or more than one unless the context clearly dictates otherwise. The term "or" is used to refer to a nonexclusive "or" unless otherwise indicated. The statement "at least one of A and B" or "at least one of A or B" has the same meaning as "A, B, or A and B." In addition, it is to be understood that the phraseology or terminology employed herein, and not otherwise defined, is for the purpose of description only and not of limitation. Any use of section headings is intended to aid reading of the document and is not to be interpreted as limiting; information that is relevant to a section heading may occur within or outside of that particular section.

In the methods described herein, the acts can be carried out in a specific order as recited herein. Alternatively, in any aspect(s) disclosed herein, specific acts may be carried out in any order without departing from the principles of the invention, except when a temporal or operational sequence is explicitly recited. Furthermore, specified acts can be carried out concurrently unless explicit claim language recites that they be carried out separately or the plain meaning of the claims would require it. For example, a claimed act of doing X and a claimed act of doing Y can be conducted simultaneously within a single operation, and the resulting process will fall within the literal scope of the claimed process.

The term "about" as used herein can allow for a degree of variability in a value or range, for example, within 10%, within 5%, or within 1% of a stated value or of a stated limit of a range, and includes the exact stated value or range.

The term "substantially" as used herein refers to a majority of, or mostly, as in at least about 50%, 60%, 70%, 80%, 90%, 95%, 96%, 97%, 98%, 99%, 99.5%, 99.9%, 99.99%, or at least about 99.999% or more, or 100%. The term "substantially free of' as used herein can mean having none or having a trivial amount of, such that the amount of material present does not affect the material properties of the composition including the material, such that about 0 wt% to about 5 wt% of the composition is the material, or about 0 wt% to about 1 wt%, or about 5 wt% or less, or less than, equal to, or greater than about 4.5 wt%, 4, 3.5, 3, 2.5, 2, 1.5, 1, 0.9, 0.8, 0.7, 0.6, 0.5, 0.4, 0.3, 0.2, 0.1, 0.01, or about 0.001 wt% or less, or about 0 wt%.

### Method of treating a brine composition.

Various aspects of the present invention provide a method of treating a brine composition. The method includes hydrolyzing a metal halide salt (e.g., one or more metal halide salts) in the brine composition to form a hydrolysis product including a hydrohalic acid. The metal includes an alkaline earth metal or an alkali metal. The brine composition can include produced water from petroleum extraction, produced water from CO₂ sequestration, water produced from an industrial process, a brine formed from reaction of a hydroxide salt with an ammonium chloride salt wherein the ammonium chloride salt is formed by reaction of a starting material brine with CO₂ and ammonia, a concentrate thereof, or a combination thereof. Examples of brines produced by industrial processes can include cooling tower and boiler effluent, reverse osmosis and ion exchange waste/reject streams, chlor-alkali and chemical plant waste, acid rock and mine drainage, food preservation and manufacturing waste streams, desalination waste from potable water creation, irrigation runoff, or a combination thereof. The brine composition can include produced water from oil and/or gas extraction or a concentrate thereof. The brine composition can include produced water from CO₂ sequestration or a concentrate thereof. The brine composition can include water produced from an industrial process or a concentrate thereof.

In various aspects, the brine composition is the produced water from petroleum extraction, produced water from CO₂ sequestration, water produced from an industrial process, or a combination thereof. In other aspects, the brine composition is a concentrate thereof. In various aspects, the preparation of the concentrate can occur prior to the onset of the method. In other aspects, the method can further include concentrating a starting material brine to form the brine composition.

In various aspects, the method is a method of converting chloride-dominant salts in various brines to alternative carbonate forms through the absorption of CO₂ gas, thereby displacing the chloride component and allowing it to be converted to recoverable HCl, a useful commodity chemical. The brine composition can be a brine that has been subjected to CO₂ absorption in the presence of NH₃ to form NH₄Cl and metal carbonates including the metal from the metal halide in the brine. The method can include reacting the NH₄Cl with a metal hydroxide salt such as Ca(OH)₂ in the brine subjected to CO₂ absorption to form a CaCl₂. The CaCl₂ solution can then be used as the brine composition of the present invention and subjected to hydrolysis to form HCl.

The concentrating of the starting material brine can include any suitable method of removing water therefrom, such as subjecting the starting material brine to evaporation remove at least some water therefrom. The evaporation can include thermal treatment, distillation, treatment with an evaporator, a rotary evaporator, a jacketed tank evaporator, a natural or forced recirculation evaporator, a falling film evaporator, a rising film evaporator, a climbing and falling-film plate evaporator, a vacuum evaporator, or a combination thereof.

The metal in the metal halide salt in the brine composition that is an alkaline earth metal or an alkali metal can be beryllium, magnesium, calcium, strontium, barium, radium, lithium, sodium, potassium, rubidium, cesium, francium, a rare-earth element (REE), or a combination thereof. The rare earth element can be any rare earth element found in geologic brines, such as any one or more of the periodic table series lanthanum to lutetium (i.e., La, Ce, Pr, Nd, Pm, Sm, Eu, Gd, Tb, Dy, Ho, Er, Tm, Yb, and Lu) and the chemically similar yttrium and scandium. The metal can be calcium, sodium, magnesium, potassium, lithium, or a combination thereof. The halide in the metal halide salt in the brine composition can be any suitable halide, such as chloride, bromide, iodide, or fluoride. The halide can be chloride. The metal halide salt can be a beryllium halide salt, a magnesium halide salt, a calcium halide salt, a strontium halide salt, a barium halide salt, a radium halide salt, a lithium halide salt, a sodium halide salt, a potassium halide salt, a rubidium halide salt, a cesium halide salt, a francium halide salt, a REE halide salt, or a combination thereof. The metal halide salt can be beryllium chloride, magnesium chloride, calcium chloride, strontium chloride, barium chloride, radium chloride, lithium chloride, sodium chloride, potassium chloride, rubidium chloride, cesium chloride, francium chloride, an REE chloride, or a combination thereof. The metal halide salt can be calcium chloride, sodium chloride, magnesium chloride, lithium chloride, sodium chloride, or a combination thereof. The brine composition can include a combination of metal halide salts, such as a combination of two or more of beryllium chloride, magnesium chloride, calcium chloride, strontium chloride, barium chloride, radium chloride, lithium chloride, sodium chloride, potassium chloride, rubidium chloride, cesium chloride, an REE chloride, and francium chloride. For example, the brine composition can include calcium chloride and sodium chloride.

The hydrohalic acid produced by the hydrolysis can be any suitable hydrohalic acid, such as HCl, HBr, HI, HF, or a combination thereof. The hydrohalic acid can be HCl. The halide in the hydrohalic acid is the halide from the metal halide salt.

The hydrolysis product can include a hydroxide salt of the metal in the metal halide salt. For example, the hydroxide salt can be Be(OH)₂, Mg(OH)₂, Ca(OH)₂, Sr(OH)₂, Ba(OH)₂, Ra(OH)₂, LiOH, NaOH, KOH, RbOH, CsOH, FrOH, a hydroxide salt of a REE, or a combination thereof. The hydroxide salt can be Ca(OH)₂, Mg(OH)₂, LiOH, NaOH, KOH, or a combination thereof. Prior to the hydrolyzing of the brine composition, the brine composition can be substantially free of the hydroxide salt of the metal in the metal halide salt.

In various aspects, the hydrolyzing of the metal halide salt in the brine composition can be free of adding CO₂ gas to the brine composition. In other aspects, the hydrolyzing of the metal halide salt in the brine composition can include adding CO₂ gas to the brine composition, wherein the hydrolysis product includes a carbonate salt of the metal in the metal halide salt, a bicarbonate salt of the metal in the metal halide salt, or a combination thereof. The carbonate or bicarbonate salt can include a salt of Be, Mg, Ca, Sr, Ba, Ra, Li, Na, K, Rb, Cs, Fr, a REE, or a combination thereof. The carbonate or bicarbonate salt can include MgCO₃, CaCO₃, Li₂CO₃, Na₂CO₃, K₂CO₃, Ca(HCO₃)₂, Mg(HCO₃)₂, LiHCO₃, NaHCO₃, KHCO₃, a REE carbonate, a REE bicarbonate, or a combination thereof. In various aspects, the carbonate or bicarbonate salt represents a stable form of the added CO₂ that can be safely disposed of; as such, the method can be a method of CO₂ sequestration. Prior to the hydrolyzing of the brine composition, the brine composition can be substantially free of the carbonate salt of the metal in the metal halide salt, the bicarbonate salt of the metal in the metal halide salt, or a combination thereof.

Water can be any suitable proportion of the brine composition. For example, water can be 50 wt% to 99 wt% water, or 50 wt% to 93 wt% water, or less than or equal to 99 wt% and greater than or equal to 50 wt% and less than, equal to, or greater than 52 wt%, 54, 56, 58, 60, 62, 64, 66, 68, 70, 72, 74, 76, 78, 80, 82, 84, 86, 88, 90, 91, 92, 93, 94, 95, 96, 97, or 98 wt%. The brine composition can have a total concentration of metal halide salts therein of 1 wt% to 50 wt%, or 7 wt% to 50 wt%, or less than or equal to 50 wt% and greater than or equal to 1 wt% and less than, equal to, or greater than 2 wt%, 3, 4, 5, 6, 7, 8, 9, 10, 12, 14, 16, 18, 20, 22, 24, 26, 28, 30, 32, 34, 36, 38, 40, 42, 44, 46, or 48 wt%.

In various aspects, the brine composition includes a sodium halide salt and a calcium halide salt. The molar ratio of sodium halide salt to calcium halide salt can be 0:1 (i.e., no sodium halide salt) to 1:0 (i.e., no calcium halide salt), or 0:1 to 100:1, or 0:1 to 1:1, or less than or equal to 1:0 and greater than or equal to 0:1 and less than, equal to, or greater than 0.1:1, 0.2:1, 0.3:1, 0.4:1, 0.5:1, 0.6:1, 0.7:1, 0.8:1, 0.9:1, 1:1, 1.1:1, 1.2:1, 1.4:1, 1.6:1, 1.8:1, 2:1, 2.5:1, 3:1, 3.5:1, 4:1, 5:1, 6:1, 7:1, 8:1, 9:1, 10:1, 20:1, 30:1, 40:1, 50:1, 60:1, 70:1, 80:1, 90:1, or 100:1.

The method can include performing the hydrolyzing the brine composition at any suitable temperature, such as at a temperature of room temperature to 1000 °C, or 300 °C to 700 °C, or 400 °C to 600 °C, or less than or equal to 1000 °C and greater than or equal to 0 °C and less than, equal to, or greater than 5 °C, 10, 15, 20, 25, 30, 35, 40, 50, 60, 80, 100, 150, 200, 250, 300, 320, 340, 360, 380, 400, 420, 440, 460, 480, 500, 520, 540, 560, 580, 600, 620, 640, 660, 680, 700, 750, 800, 850, or 950 °C. The method can include performing the hydrolyzing of the brine composition at any suitable pressure, such as ambient pressure, or such as in a pressurized environment, or such as at a pressure of 0.1 MPa to 100 MPa, 0.1 MPa to 10 MPa, 0.1 MPa to 1 MPa, or less than or equal to 100 MPa and greater than or equal to 0.1 MPa and less than, equal to, or greater than 0.2 MPa, 0.3, 0.4, 0.5, 0.6, 0.8, 1, 1.5, 2, 3, 4, 5, 10, 20, 30, 40, 50, 60, 70, 80, or 90 MPa. The method can include performing the hydrolyzing of the brine composition for any suitable duration, such as for a duration of 0.1 second to 5 h, 1 second to 1 h, or less than or equal to 5 h and greater than or equal to 0.1 second and less than, equal to, or greater than 1 second, 5, 10, 15, 20, 25, 30, 35, 40, 45, 50, 55 seconds, 1 min, 2, 3, 4, 5, 10, 15, 20, 25, 30, 35, 40, 45, 50, 55 minutes, 1 h, 1.5, 2, 2.5, 3, 3.5, 4, or 4.5 h. During the hydrolyzing of the brine composition, water in the brine composition and in the hydrolysis product can be in a liquid state, a gaseous state, or a combination thereof. The hydrolyzing of the brine composition can be performed as a batch process or as a continuous process. The hydrolyzing of the brine composition can be performed in a heated and pressurized reactor. The hydrolyzing of the metal halide salt can be performed in an unpressurized heated reactor at ambient pressure. The hydrolyzing of the metal halide salt can produce a vapor stream including water and the hydrohalic acid.

The hydrolyzing of the metal halide salt can also produce a non-vapor (i.e., liquid and/or solid) stream including the hydroxide salt of the metal in the metal halide salt, the carbonate salt of the metal in the metal halide salt, the bicarbonate salt of the metal in the metal halide salt, or a combination thereof. The brine composition can be substantially free of the hydrohalic acid prior to the hydrolyzing of the brine composition. The hydrohalic acid can form any suitable proportion of condensed vapors of the hydrolysis product, such as 1 wt% to 35 wt% of condensed vapors of the hydrolysis product, 10 wt% to 20 wt%, or less than or equal to 35 wt% and greater than or equal to 1 wt% and less than, equal to, or greater than 2 wt%, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, or 34 wt% of the hydrolysis product. Any suitable proportion of the hydrolysis product can be the hydroxide salt of the metal in the metal halide salt, the carbonate salt of the metal in the metal halide salt, or the bicarbonate salt of the metal in the metal halide salt, such as 1 wt% to 100 wt% of a non-vaporous (e.g., liquid or solid) portion of the hydrolysis product, or 10 wt% to 40 wt%, or less than or equal to 100 wt% and greater than or equal to 1 wt% and less than, equal to, or greater than 2 wt%, 4, 6, 8, 10, 12, 14, 16, 18, 20, 22, 24, 26, 28, 30, 32, 34, 36, 38, 40, 45, 50, 55, 60, 65, 70, 75, 80, 85, .

Water can form any suitable proportion of condensed vapors of the hydrolysis product. For example, water can be 65 wt% to 99 wt% of condensed vapors of the hydrolysis product, 80 wt% to 90 wt%, or less than or equal to 99 wt% and greater than or equal to 15 wt% and less than, equal to, or greater than 65 wt%, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, or 98 wt% of the hydrolysis product.

In various aspects, the hydrolyzing can include removing one or more products of the hydrolysis from the brine composition to drive the hydrolysis reaction forward. For example, the hydrolyzing can include removing at least part of the hydrohalic acid produced during the hydrolyzing to increase a weight percentage of the hydrohalic acid in the hydrolysis product. The hydrolyzing can include removing at least part of a hydroxide salt of the metal in the metal halide salt, a carbonate salt of the metal in the metal halide salt, or a bicarbonate salt of the metal in the metal halide salt produced during the hydrolyzing to increase a weight percentage of the hydrohalic acid in the hydrolysis product.

The method can include separating at least part of the hydrohalic acid in the hydrolysis product from the hydrolysis product. The separation can include forming a composition from the hydrolysis product that has a higher concentration of the hydrohalic acid than the remaining hydrolysis product. The method can include separating at least part of a hydroxide salt of the metal in the metal halide salt, a carbonate salt of the metal in the metal halide salt, or a bicarbonate salt of the metal in the metal halide salt, in the hydrolysis product from the hydrolysis product. The method can include forming a composition from the hydrolysis product that has a higher concentration of the hydroxide salt of the metal in the metal halide salt, a carbonate salt of the metal in the metal halide salt, or a bicarbonate salt of the metal in the metal halide salt than the remaining hydrolysis product. The method can include separating at least part of the hydrohalic acid in the hydrolysis product from a hydroxide salt of the metal in the metal halide salt, a carbonate salt of the metal in the metal halide salt, or a bicarbonate salt of the metal in the metal halide salt, in the hydrolysis product.

In various aspects, the metal is lithium or includes lithium, and the hydrolysis product includes lithium hydroxide, lithium carbonate, lithium bicarbonate, or a combination thereof. The method can be a method of recovering lithium from the brine composition.

In various aspects, the brine composition includes NaCl and CaCl₂. Thermal energy is added to the hydrolysis process and CO₂ gas is optionally added. The hydrolysis process can produce Ca(OH)₂, and can produce CaCO₃ (e.g., if the CO₂ is added), which can be precipitated and or flocculated from the hydrolysis product, and which can be used as scrubber reagent, can be sold, or can be sequestered in a landfill. The hydrolysis process can produce a softened brine, which can include soluble carbonates (e.g., if the CO₂ is added) such as NaHCO₃, HCl, and residuals (e.g., such as potential high value minerals). The HCl can be used for scale control, well rework, or can be sold. The soluble carbonates can be used as softening reagents, for CO₂ sequestration, or can be sold.

The method can include disposing of the hydrolysis product. The disposing can occur after removal of at least some of the hydrohalic acid produced by the hydrolysis, or other materials produced by the hydrolysis (e.g., metal hydroxide, metal carbonate, or metal bicarbonate), from the hydrolysis product. The disposing can include placing the remainder of the hydrolysis product downhole (i.e., disposing of the hydrolysis product subterraneously), disposing of the hydrolysis product into natural fresh or salt water, or disposing of the hydrolysis product into the soil.

### Examples

Various aspects of the present invention can be better understood by reference to the following Examples which are offered by way of illustration. The present invention is not limited to the Examples given herein.

In the Examples herein, each hydrolyzed sample is characterized via online measurement of HCl release using a Fourier transform infrared (FTIR) gas analyzer and posttest analysis of recovered samples including the condensed HCl, hydrolyzed liquid, and precipitated solids. Titration analysis and thermogravimetric analysis (TGA) can be used to characterize the hydrolysis product as well.

### Example 1. Hydrolysis of salt mixtures of CaCl₂ and NaCl salt mixtures.

Simulated mixtures of NaCl and CaCl₂ are hydrolyzed to parametrically study the hydrolysis of mixed salts. Although using only these two salts is a simplification of the composition of produced water, NaCl and CaCl₂ represent the bulk constituents of Bakken produced water and will drive the overall economics of the process. The mixtures of salts tested include idealized simulated mixtures of NaCl and CaCl₂ over the range spanning 100% NaCl to 100% CaCl₂. The mixture of NaCl and CaCl₂ is added to a high purity alumina liquid phase reactor with a heater, and steam is added to the reactor as the reactor is heated. The resulting hydrolyzed product is removed and analyzed. Key testing objectives are to identify blended salt mixtures that are beneficial for hydrolysis in terms of increasing the rate of reaction or reducing the operating temperature. The results will provide a simplified, but continuous, set of hydrolysis conversion data to identify preferred operating conditions and provide context for interpreting results with produced water.

Preliminary results identified a preferrable range of Na:Ca chloride salt composition for liquid phase hydrolysis to occur: between a Na:Ca molar ratio of 0:1 (i.e., CaCl₂ only) up to an equimolar ratio of the salts having a Na: Ca molar ratio of 1:1. At molar ratios of Na:Ca greater than 1, melting of the reactants was impeded at 550 °C which prevented the use of the reactor. Based on qualitative observations during the testing, the addition of NaCl to the salt mixture appeared to speed melting and reduce the viscosity of the liquid reactants. Hypothetically, the use of the preferrable range of Na:Ca chloride salt ratios, and the addition of NaCl to the salt mixture, or a combination thereof, may facilitate reactor mixture and overall mass transfer to improve the hydrolysis reaction rate, which will be revealed by further studies. Even if the presence of NaCl does not enhance the hydrolysis rate of CaCl₂, Na addition to improve liquid phase behavior is a significant result in itself as it may lead to more efficient reactor design and operation. For example, it appears that a NaCl-CaCl₂ eutectic that is formed within the preferrable Na:Ca molar range may present a lower risk of solidification resulting from slight reductions in temperature; as such the hydrolysis reactor could hypothetically be operated at a lower temperature to maximize thermal efficiency.

### Example 2, Hydrolysis of produced water and hydrolysis product characterization.

Testing with more complicated salt mixtures taken from real produced water is conducted with a focus on determining the fate of a wider suite of relevant elements. The resulting products from brine hydrolysis are characterized to determine potential uses for them and their value. The tested samples begins with the as-sampled brine composition and proceed to increasing Ca:Na levels by partially evaporating the produced water, which results in a preferential precipitation of NaCl over CaCl₂ to increase the Ca:Na salt ratio. Sampling and analysis are identical to Example 1 except that the posttest samples are analyzed for an expanded suite of elements beyond Cl, Ca, and Na to include key additional elements found in produced water such as Br, Li, K, Mg, Sr, and Ba.

The findings are used to develop a preliminary process flow diagram showing the fractionation of produced water into potentially salable products and any remaining disposal streams. This diagram can provide a basic of a techno-economic analysis to evaluate profitability and scalability of the concept relative to the typical production rates and gathering capacities found in the Bakken.

### Example 3, Large scale hydrolysis of water.

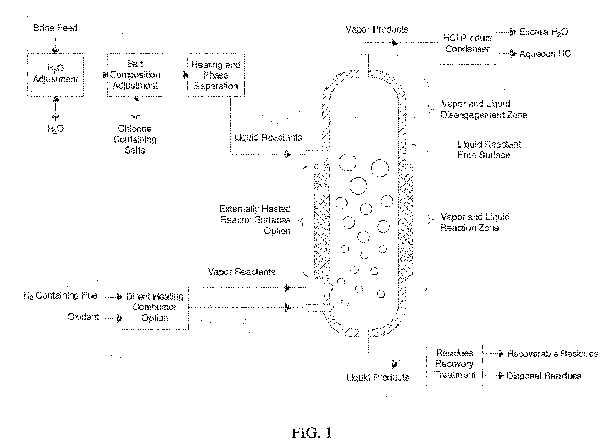

FIG. 1 shows a hydrolysis reactor and supporting process scheme, in accordance with various aspects. The hydrolysis reactor design exposes the reacting salts, preferably in liquid form, to a stream of superheated steam or a steam-containing gas mixture. Two-phase operation is useful because HCl vaporizes under hydrolysis conditions and its separation is made possible by transferring it from the liquid phase to the vapor phase. A vapor-solid hydrolysis reactor is also possible, but vapor-liquid is preferred for the hydrolysis of CaCl₂-containing mixtures to maximize mass transfer since this salt will soften and fuse under hydrolysis conditions, and thereby degrade any porous structure which hinders complete reaction of the salt.

The reactor includes three mass exchange ports: 1) feed port for reactants (e.g., a brine composed of H₂O and one or more chloride salts); 2) vapor exhaust port for unreacted gases and vaporized HCl product; and 3) liquid exhaust port for hydrolyzed salt mixture that contains some fraction of recoverable hydroxide compounds, including Ca(OH)₂.

Given the phase change behavior of the reactants, it can be desirable to provide two feed ports for the reactants as shown in FIG. 1: one for the steam-containing vapor and one for the chloride salts fed in either solid or liquid form. Alternatively, a single, common feed port can instead be employed, with a reactor design that accommodates the phase segregation that will occur as the reactant stream is heated to hydrolysis conditions. For example, in a single common feed port design, the non-volatile salt reactants can be conveyed into the reaction zone during heating, as most of the water portion of the reactants will vaporize leaving the non-volatile constituents behind; non-volatile conveyance may be through mechanical means or by ensuring they are heated sufficiently that they liquefy and flow to the desired reaction zone.

The reaction zone within the hydrolysis reactor of FIG. 1 provides thorough contact between the vapor and liquid reactants while supplying the thermal energy required for hydrolysis to occur. The reactor shown in FIG. 1 injects vapor bubbles at a depth below the liquid reactant free surface such that the hydrolysis reaction is achieved during the buoyancy-driven rise time of the bubbles. This buoyancy-driven flow can be used to entrain the liquid to create co-current contact between the reactants, or the liquid reactants can be actively circulated against the buoyancy flow to create a countercurrent contact with the rising vapor.

As shown in FIG. 1, thermal energy for hydrolysis may be provided by the direct combustion of a hydrogen-containing fuel w such that the thermal energy is generated by combustion of the fuel and at least a portion of the H₂O needed for hydrolysis is generated during combustion. Alternatively, thermal energy transfer can be achieved by leveraging any suitable method of reactant circulation to flow the reactants past heated reactor surfaces where thermal energy is transferred by conduction through the reactor wall; the source of heat could come from any known method.

The scheme of FIG. 1 shows process steps for converting a chloride brine to useful chemical products. The process can be summarized by the following steps. If necessary, water content of the brine stream is adjusted (e.g., via evaporation) to reach the preferred range for hydrolysis reactor operation; this process occurs in the H₂O Adjustment block in FIG. 1. If necessary, the salt mixture composition is adjusted to a preferred composition (e.g., a preferred ratio of Na to Cl) that improves or optimizes the hydrolysis reactor operation; this process occurs in the Salt Composition Adjustment block of FIG. 1. The resulting brine stream is heated and the resulting separate phases are fed to a hydrolysis reactor; this process occurs in the Heating and Phase Separation Block of FIG. 1, which could be separate from the hydrolysis reactor as shown, or an integral part of it. In the hydrolysis reactor, CaCl₂ and any other reactive chloride salts undergo hydrolysis to produce phase-segregated streams of HCl vapor and either liquids or solids that contain recoverable hydroxide compounds including Ca(OH)₂. The HCl vapor stream is cooled and fully or partially condensed to produce a product stream of HCl aqueous solution; this process occurs in the HCl Product Condenser block in FIG. 1. The liquid or solid product stream undergoes additional processing to segregate useful materials from the hydrolyzed residues; this process occurs in the Residues Recovery Treatment block in FIG. 1.

### Example 4, Conversion of chloride-dominant salts to carbonate form with HCl conversion.

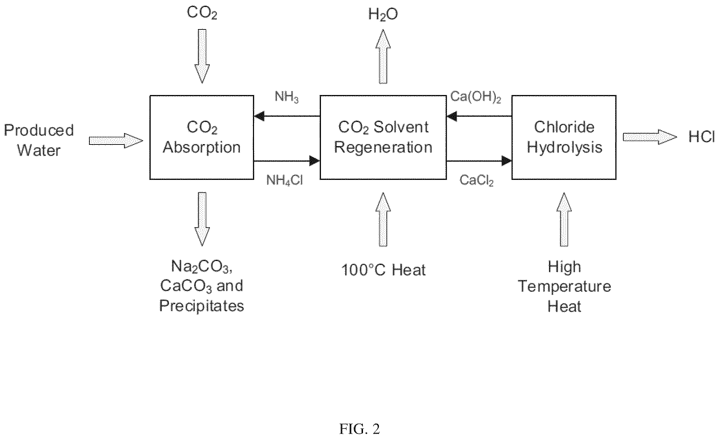

FIG. 2 shows a scheme illustrating conversion of chloride-dominant salts to carbonate form with HCl conversion. Produced water is reacted in a first unit with CO₂ and NH₃, forming metal carbonate salts (e.g., sodium and/or calcium carbonate) and NH₄Cl. The NH₄Cl is flowed to a second unit that reacts Ca(OH)₂ with the NH₄Cl to form CaCl₂ and NH3. The NH₃ is flowed back to the first unit, and the CaCl₂ is flowed to a brine hydrolysis unit that reacts the CaCl₂ with water to form HCl and Ca(OH)₂. The Ca(OH)₂ is flowed back to the second unit. CO₂ Absorption key reactions: NaCl (aq) + 2NH₃ (aq) + CO₂ (g) → NaHCO₃ (s) + 2NH₄Cl (aq); 2NaHCO₃ (s) → Na₂CO₃ (s) + H₂O + CO₂ (g); CaCl₂ (aq) + 2NH₃ + CO₂ (g) → CaCO₃ (s) + 2NH₄Cl (aq). CO₂ Solvent regeneration key reaction: Ca(OH)₂ (aq) + 2NH₄Cl (aq) → CaCl₂ (aq) + 2H₂O + 2NH₃ (g). Chloride hydrolysis key reaction: CaCl₂ + 2H₂O → Ca(OH)₂ + 2HCl.

The terms and expressions that have been employed are used as terms of description and not of limitation, and there is no intention in the use of such terms and expressions of excluding any equivalents of the features shown and described or portions thereof, but it is recognized that various modifications are possible within the scope of the aspects of the present invention. Thus, it should be understood that although the present invention has been specifically disclosed by specific aspects and optional features, modification and variation of the concepts herein disclosed may be resorted to by those of ordinary skill in the art, and that such modifications and variations are considered to be within the scope of aspects of the present invention.

### Exemplary Aspects.

The following exemplary aspects are provided, the numbering of which is not to be construed as designating levels of importance:
Aspect 1 provides a method of treating a brine composition, the method comprising:
   hydrolyzing a metal halide salt in the brine composition to form a hydrolysis product comprising a hydrohalic acid, the metal comprising an alkaline earth metal or an alkali metal.
Aspect 2 provides the method of Aspect 1, wherein the brine composition comprises produced water from petroleum extraction, produced water from CO₂ sequestration, water produced from an industrial process, a brine formed from reaction of a hydroxide salt with an ammonium chloride salt wherein the ammonium chloride salt is formed by reaction of a starting material brine with CO₂ and ammonia, a concentrate thereof, or a combination thereof.
Aspect 3 provides the method of any one of Aspects 1-2, wherein the brine composition comprises produced water from oil and/or gas extraction or a concentrate thereof.
Aspect 4 provides the method of any one of Aspects 1-3, wherein the brine composition comprises produced water from CO₂ sequestration or a concentrate thereof.
Aspect 5 provides the method of any one of Aspects 1-4, wherein the brine composition comprises water produced from an industrial process or a concentrate thereof.
Aspect 6 provides the method of any one of Aspects 1-5, wherein the method further comprises concentrating a starting material brine to form the brine composition, wherein the starting material brine comprises produced water from petroleum extraction, produced water from CO₂ sequestration, water produced from an industrial process, or a combination thereof.
Aspect 7 provides the method of Aspect 6, wherein concentrating the starting material brine comprises subjecting the starting material brine to evaporation remove at least some water therefrom.
Aspect 8 provides the method of any one of Aspects 6-7, wherein the evaporation comprises thermal treatment, distillation, an evaporator, a rotary evaporator, a jacketed tank evaporator, a natural or forced recirculation evaporator, a falling film evaporator, a rising film evaporator, a climbing and falling-film plate evaporator, a vacuum evaporator, or a combination thereof.
Aspect 9 provides the method of any one of Aspects 1-8, wherein the metal is beryllium, magnesium, calcium, strontium, barium, radium, lithium, sodium, potassium, rubidium, cesium, francium, a rare-earth element (REE) (e.g., La, Ce, Pr, Nd, Pm, Sm, Eu, Gd, Tb, Dy, Ho, Er, Tm, Yb, Lu, yttrium, or scandium), or a combination thereof.
Aspect 10 provides the method of any one of Aspects 1-9, wherein the metal is calcium, sodium, magnesium, potassium, lithium, or a combination thereof.
Aspect 11 provides the method of any one of Aspects 1-10, wherein the halide is chloride, bromide, iodide, or fluoride.
Aspect 12 provides the method of any one of Aspects 1-11, wherein the halide is chloride.
Aspect 13 provides the method of any one of Aspects 1-12, wherein the metal halide salt is a beryllium halide salt, a magnesium halide salt, a calcium halide salt, a strontium halide salt, a barium halide salt, a radium halide salt, a lithium halide salt, a sodium halide salt, a potassium halide salt, a rubidium halide salt, a cesium halide salt, a francium halide salt, or a combination thereof.
Aspect 14 provides the method of any one of Aspects 1-13, wherein the metal halide salt is beryllium chloride, magnesium chloride, calcium chloride, strontium chloride, barium chloride, radium chloride, lithium chloride, sodium chloride, potassium chloride, rubidium chloride, cesium chloride, francium chloride, or a combination thereof.
Aspect 15 provides the method of any one of Aspects 1-14, wherein the metal halide salt is calcium chloride, sodium chloride, magnesium chloride, lithium chloride, sodium chloride, or a combination thereof.
Aspect 16 provides the method of any one of Aspects 1-15, wherein the hydrohalic acid is HCl, HBr, HI, HF, or a combination thereof.
Aspect 17 provides the method of any one of Aspects 1-16, wherein the hydrohalic acid is HCl.
Aspect 18 provides the method of any one of Aspects 1-17, wherein the hydrolysis product comprises a hydroxide salt of the metal in the metal halide salt.
Aspect 19 provides the method of Aspect 18, wherein the hydroxide salt is Be(OH)₂, Mg(OH)₂, Ca(OH)₂, Sr(OH)₂, Ba(OH)₂, Ra(OH)₂, LiOH, NaOH, KOH, RbOH, CsOH, FrOH, or a combination thereof.
Aspect 20 provides the method of any one of Aspects 18-19, wherein the hydroxide salt is Ca(OH)₂, Mg(OH)₂, LiOH, NaOH, KOH, or a combination thereof.
Aspect 21 provides the method of any one of Aspects 1-20, wherein the hydrolyzing of the metal halide salt in the brine composition further comprises adding CO₂ gas to the brine composition, wherein the hydrolysis product comprises a carbonate salt of the metal in the metal halide salt, a bicarbonate salt of the metal in the metal halide salt, or a combination thereof.
Aspect 22 provides the method of Aspect 21, wherein the carbonate or bicarbonate salt comprises MgCO₃, CaCO₃, Li₂CO₃, Na₂CO₃, K₂CO₃, Ca(HCO₃)₂, Mg(HCO₃)₂, LiHCO₃, NaHCO₃, KHCO₃, or a combination thereof.
Aspect 23 provides the method of any one of Aspects 1-22, wherein the brine composition has a total concentration of metal halide salts therein of 1 wt% to 50 wt%.
Aspect 24 provides the method of any one of Aspects 1-23, wherein the brine composition has a total concentration of metal halide salts therein of 7 wt% to 50 wt%.
Aspect 25 provides the method of any one of Aspects 1-24, wherein the brine composition has a ratio of sodium halide salt to calcium halide salt of 0: 1 to 1:0.
Aspect 26 provides the method of any one of Aspects 1-25, wherein the brine composition has a ratio of sodium halide salt to calcium halide salt of 0: 1 to 1:1.
Aspect 27 provides the method of any one of Aspects 1-26, wherein the brine composition is 50 wt% to 99 wt% water.
Aspect 28 provides the method of any one of Aspects 1-27, wherein the brine composition is 50 wt% to 93 wt% water.
Aspect 29 provides the method of any one of Aspects 1-28, comprising performing the hydrolyzing of the brine composition at a temperature of room temperature to 1000 °C.
Aspect 30 provides the method of any one of Aspects 1-29, comprising performing the hydrolyzing of the brine composition at a temperature of 300 °C to 700 °C.
Aspect 31 provides the method of any one of Aspects 1-30, comprising performing the hydrolyzing of the brine composition at a temperature of 400 °C to 600 °C.
Aspect 32 provides the method of any one of Aspects 1-31, comprising performing the hydrolyzing of the brine composition at a pressure of 0.1 MPa to 100 MPa.
Aspect 33 provides the method of any one of Aspects 1-32, comprising performing the hydrolyzing of the brine composition at a pressure of 0.1 MPa to 10 MPa.
Aspect 34 provides the method of any one of Aspects 1-33, comprising performing the hydrolyzing of the brine composition at a pressure of 0.1 MPa to 1 MPa.
Aspect 35 provides the method of any one of Aspects 1-34, comprising performing the hydrolyzing of the brine composition for a duration of 0.1 second to 5 h.
Aspect 36 provides the method of any one of Aspects 1-35, comprising performing the hydrolyzing of the brine composition for a duration of 1 second to 1 h.
Aspect 37 provides the method of any one of Aspects 1-36, wherein during the hydrolyzing of the brine composition, water in the brine composition and in the hydrolysis product are in a liquid state.
Aspect 38 provides the method of any one of Aspects 1-37, wherein during the hydrolyzing of the brine composition, water in the brine composition and in the hydrolysis product are in a gaseous state.
Aspect 39 provides the method of any one of Aspects 1-38, wherein the hydrolyzing of the brine composition is a batch process.
Aspect 40 provides the method of any one of Aspects 1-38, wherein the hydrolyzing of the brine composition is a continuous process.
Aspect 41 provides the method of any one of Aspects 1-40, wherein the hydrohalic acid is 1 wt% to 35 wt% of condensed vapors of the hydrolysis product.
Aspect 42 provides the method of any one of Aspects 1-41, wherein the hydrohalic acid is 10 wt% to 20 wt% of condensed vapors of the hydrolysis product.
Aspect 43 provides the method of any one of Aspects 1-42, wherein the brine composition is substantially free of the hydrohalic acid prior to the hydrolyzing of the brine composition.
Aspect 44 provides the method of any one of Aspects 1-43, wherein water is 65 wt% to 99 wt% of condensed vapors of the hydrolysis product.
Aspect 45 provides the method of any one of Aspects 1-44, wherein water is 80 wt% to 90 wt% of condensed vapors of the hydrolysis product.
Aspect 46 provides the method of any one of Aspects 1-45, wherein prior to the hydrolyzing of the brine composition, the brine composition is substantially free of a hydroxide salt of the metal in the metal halide salt, substantially free of a carbonate salt of the metal in the metal halide salt, and substantially free of a bicarbonate salt of the metal in the metal halide salt.
Aspect 47 provides the method of any one of Aspects 1-46, wherein the hydrolyzing of the metal halide salt is performed in a heated and pressurized reactor.
Aspect 48 provides the method of any one of Aspects 1-47, wherein the hydrolyzing of the metal halide salt is performed in an unpressurized heated reactor at ambient pressure.
Aspect 49 provides the method of any one of Aspects 1-48, wherein the hydrolyzing comprises removing at least part of the hydrohalic acid produced during the hydrolyzing to increase a weight percentage of the hydrohalic acid in the hydrolysis product.
Aspect 50 provides the method of any one of Aspects 1-49, wherein the hydrolyzing comprises removing at least part of a hydroxide salt of the metal in the metal halide salt, a carbonate salt of the metal in the metal halide salt, or a bicarbonate salt of the metal in the metal halide salt produced during the hydrolyzing to increase a weight percentage of the hydrohalic acid in the hydrolysis product.
Aspect 51 provides the method of any one of Aspects 1-50, further comprising separating at least part of the hydrohalic acid in the hydrolysis product from the hydrolysis product.
Aspect 52 provides the method of any one of Aspects 1-51, further comprising separating at least part of a hydroxide salt of the metal in the metal halide salt, a carbonate salt of the metal in the metal halide salt, or a bicarbonate salt of the metal in the metal halide salt, in the hydrolysis product from the hydrolysis product.
Aspect 53 provides the method of any one of Aspects 1-52, further comprising separating at least part of the hydrohalic acid in the hydrolysis product from a hydroxide salt of the metal in the metal halide salt, a carbonate salt of the metal in the metal halide salt, or a bicarbonate salt of the metal in the metal halide salt, in the hydrolysis product.
Aspect 54 provides the method of any one of Aspects 1-53, wherein the metal is lithium, wherein the hydrolysis product comprises lithium hydroxide, lithium carbonate, lithium bicarbonate, or a combination thereof, wherein the method is a method of recovering lithium from the brine composition.
Aspect 55 provides a method of treating a brine composition, the method comprising:
   hydrolyzing a metal halide salt in the brine composition to form a hydrolysis product comprising a hydrohalic acid and a hydroxide salt of the metal in the metal halide salt, the metal comprising an alkaline earth metal or an alkali metal.
Aspect 56 provides a method of treating a brine composition, the method comprising:
   hydrolyzing a metal halide salt in the brine composition, the hydrolyzing comprising adding CO₂ gas to the brine composition, to form a hydrolysis product comprising a hydrohalic acid and a carbonate salt of the metal in the metal halide salt, a bicarbonate salt of the metal in the metal halide salt, or a combination thereof, the metal comprising an alkaline earth metal or an alkali metal.
Aspect 57 provides a method of recovering lithium from a brine composition, the method comprising:
   hydrolyzing a lithium halide salt in the brine composition to form a hydrolysis product comprising a hydrohalic acid and a salt of the lithium in the lithium halide salt.
Aspect 58 provides the method of any one or any combination of Aspect 1-57 optionally configured such that all elements or options recited are available to use or select from.

One further non-limiting embodiment of the present technology will now be described by way of reference to the following clauses:
1. A method of treating a brine composition, the method comprising:
   hydrolyzing a metal halide salt in the brine composition to form a hydrolysis product comprising a hydrohalic acid, the metal comprising an alkaline earth metal or an alkali metal.
2. The method of clause 1, wherein the brine composition comprises produced water from petroleum extraction, produced water from CO₂ sequestration, water produced from an industrial process, a concentrate thereof, a brine formed from reaction of a hydroxide salt with an ammonium chloride salt wherein the ammonium chloride salt is formed by reaction of a starting material brine with CO₂ and ammonia, or a combination thereof.
3. The method of clause 1 or 2, wherein the method further comprises concentrating a starting material brine to form the brine composition, wherein the starting material brine comprises produced water from petroleum extraction, produced water from CO₂ sequestration, water produced from an industrial process, or a combination thereof.
4. The method of any one of the preceding clauses, wherein the metal is calcium, sodium, magnesium, lithium, sodium, a rare-earth element (REE), or a combination thereof.
5. The method of any one of the preceding clauses, wherein the hydrohalic acid is HCl.
6. The method of any one of the preceding clauses, wherein the hydrolysis product further comprises a hydroxide salt of the metal in the metal halide salt.
7. The method of clause 6, wherein the hydroxide salt is Ca(OH)₂, Mg(OH)₂, LiOH, NaOH, KOH, a rare-earth element (REE) hydroxide salt, or a combination thereof.
8. The method of any one of the preceding clauses, wherein the hydrolyzing of the metal halide salt in the brine composition further comprises adding CO₂ gas to the brine composition, wherein the hydrolysis product comprises a carbonate salt of the metal in the metal halide salt, a bicarbonate salt of the metal in the metal halide salt, or a combination thereof.
9. The method of clause 8, wherein the carbonate or bicarbonate salt comprises MgCO₃, CaCO₃, Li₂CO₃, Na₂CO₃, K₂CO₃, Ca(HCO₃)₂, Mg(HCO₃)₂, LiHCO₃, NaHCO₃, KHCO₃, a rare-earth element (REE) carbonate, a rare-earth element (REE) bicarbonate, or a combination thereof.
10. The method of any one of the preceding clauses, wherein the brine composition has a total concentration of metal halide salts therein of 1 wt% to 50 wt%.
11. The method of any one of the preceding clauses, wherein the brine composition has a molar ratio of sodium halide salt to calcium halide salt of 0.01:1 to 1:1.
12. The method of any one of the preceding clauses, wherein the brine composition is 50 wt% to 99 wt% water.
13. The method of any one of the preceding clauses, comprising performing the hydrolyzing of the brine composition at a temperature of room temperature to 1000 °C.
14. The method of any one of the preceding clauses, comprising performing the hydrolyzing of the brine composition at a temperature of 400 °C to 600 °C.
15. The method of any one of the preceding clauses, comprising performing the hydrolyzing of the brine composition at ambient pressure.
16. The method of any one of the preceding clauses, comprising performing the hydrolyzing of the brine composition for a duration of 0.1 second to 5 h.
17. The method of any one of the preceding clauses, wherein the hydrohalic acid is 1 wt% to 35 wt% of condensed vapors of the hydrolysis product.
18. The method of any one of the preceding clauses, wherein the hydrolyzing comprises removing at least part of the hydrohalic acid produced during the hydrolyzing to increase a weight percentage of the hydrohalic acid in the hydrolysis product.
19. The method of any one of the preceding clauses, wherein the metal is lithium, wherein the hydrolysis product comprises lithium hydroxide, lithium carbonate, lithium bicarbonate, a rare-earth element (REE) carbonate, a rare-earth element (REE) bicarbonate, or a combination thereof, wherein the method is a method of recovering lithium from the brine composition.
20. A method of recovering lithium from a brine composition, the method comprising:
   hydrolyzing a lithium halide salt and another metal halide salt in the brine composition to form a hydrolysis product comprising a hydrohalic acid and a salt of the lithium in the lithium halide salt, wherein the metal comprises an alkaline earth metal or an alkali metal.

## Claims

1. A method of treating a brine composition, the method comprising:
hydrolyzing a metal halide salt in the brine composition to form a hydrolysis product comprising a hydrohalic acid, the metal comprising an alkaline earth metal or an alkali metal.

2. The method of claim 1, wherein the brine composition comprises produced water from petroleum extraction, produced water from CO2 sequestration, water produced from an industrial process, a concentrate thereof, a brine formed from reaction of a hydroxide salt with an ammonium chloride salt wherein the ammonium chloride salt is formed by reaction of a starting material brine with CO2 and ammonia, or a combination thereof.

3. The method of claim 1, wherein the method further comprises concentrating a starting material brine to form the brine composition, wherein the starting material brine comprises produced water from petroleum extraction, produced water from CO2 sequestration, water produced from an industrial process, or a combination thereof.

4. The method of claim 1, wherein the metal is calcium, sodium, magnesium, lithium, sodium, a rare-earth element (REE), or a combination thereof.

5. The method of claim 1, wherein the hydrohalic acid is HCl.

6. The method of claim 1, wherein the hydrolysis product further comprises a hydroxide salt of the metal in the metal halide salt, wherein preferably the hydroxide salt is Ca(OH)2, Mg(OH)2, LiOH, NaOH, KOH, a rare-earth element (REE) hydroxide salt, or a combination thereof.

7. The method of claim 1, wherein the hydrolyzing of the metal halide salt in the brine composition further comprises adding CO2 gas to the brine composition, wherein the hydrolysis product comprises a carbonate salt of the metal in the metal halide salt, a bicarbonate salt of the metal in the metal halide salt, or a combination thereof, wherein preferably the carbonate or bicarbonate salt comprises MgCO3, CaCO3, Li2CO3, Na2CO3, K2CO3, Ca(HCO3)2, Mg(HCO3)2, LiHCO3, NaHCO3, KHCO3, a rare-earth element (REE) carbonate, a rare-earth element (REE) bicarbonate, or a combination thereof.

8. The method of claim 1, wherein a) the brine composition has a total concentration of metal halide salts therein of 1 wt% to 50 wt%; or
b) the brine composition has a molar ratio of sodium halide salt to calcium halide salt of 0.01:1 to 1:1; or c) the brine composition is 50 wt% to 99 wt% water.

9. The method of claim 1, comprising a) performing the hydrolyzing of the brine composition at a temperature of room temperature to 1000 °C; or b) performing the hydrolyzing of the brine composition at a temperature of 400 °C to 600 °C.

10. The method of claim 1, comprising performing the hydrolyzing of the brine composition at ambient pressure.

11. The method of claim 1, comprising performing the hydrolyzing of the brine composition for a duration of 0.1 second to 5 h.

12. The method of claim 1, wherein the hydrohalic acid is 1 wt% to 35 wt% of condensed vapors of the hydrolysis product.

13. The method of claim 1, wherein the hydrolyzing comprises removing at least part of the hydrohalic acid produced during the hydrolyzing to increase a weight percentage of the hydrohalic acid in the hydrolysis product.

14. The method of claim 1, wherein the metal is lithium, wherein the hydrolysis product comprises lithium hydroxide, lithium carbonate, lithium bicarbonate, a rare-earth element (REE) carbonate, a rare-earth element (REE) bicarbonate, or a combination thereof, wherein the method is a method of recovering lithium from the brine composition.

15. A method of recovering lithium from a brine composition, the method comprising:
hydrolyzing a lithium halide salt and another metal halide salt in the brine composition to form a hydrolysis product comprising a hydrohalic acid and a salt of the lithium in the lithium halide salt, wherein the metal comprises an alkaline earth metal or an alkali metal.
